# EUROPÄISCHE PATENTANMELDUNG

(11) **EP 3 742 108 A1**
(43) Veröffentlichungstag der Anmeldung: **25.11.2020**
(21) Anmeldenummer: 20171335.1
(22) Anmeldetag: 24.04.2020
(51) Int. Cl.: G01B 3/48, G01B 5/12, B23G 1/44

(54) **WERKZEUG UND VERFAHREN ZUR INNENGEWINDEPRÜFUNG**

(30) Priorität: 20.05.2019 DE 102019113215
(71) Anmelder: MAN Energy Solutions SE, 86153 Augsburg (DE)
(72) Erfinder: Roth, Andreas, 86169 Augsburg (DE); Menzinger, Anton, 86453 Dasing (DE); Vogg, Werner, 86479 Obergessertshausen (DE)

(57) **Zusammenfassung**

Werkzeug (10) zur Innengewindeprüfung, mit einem ersten Prüfabschnitt (12), der ein erstes Außengewinde (15) mit einem sich konisch verändernden Flankendurchmesser trägt. Fig. 1

## Beschreibung

Die Erfindung betrifft ein Werkzeug zur Innengewindeprüfung. Des Weiteren betrifft die Erfindung ein Verfahren zur Innengewindeprüfung.

Bauteile, wie zum Beispiel Muttern, bei deren Herstellung an denselben ein Innengewinde ausgebildet wird, sind hinsichtlich der Ausbildung des Innengewindes zu prüfen. Nur dann, wenn das Innengewinde innerhalb definierter Toleranzen liegt, liegt ein Gutteil vor. Anderenfalls liegt ein Schlechtteil vor. Zur Innengewindeprüfung an einem Bauteil wird bislang so vorgegangen, dass mithilfe eines Gutlehrdorns sowie eines Schlechtlehrdorns, die manuell in das Gewinde eingedreht werden, die Innengewindeprüfung erfolgt. Damit kann mit großem Aufwand unterschieden werden, ob das Innengewinde außerhalb oder innerhalb eines Toleranzbands liegt, ob also ein Gutteil oder ein Schlechtteil vorliegt. Eine weitergehende Innengewindeprüfung oder gar eine automatisierte Innengewindeprüfung ist mit den aus dem Stand derTechnik bekannten Gut- und Schlechtlehrdornen nicht möglich. Es besteht Bedarf daran, die Innengewindeprüfung zu verbessern.

Hiervon ausgehend liegt der Erfindung die Aufgabe zu Grunde, ein neuartiges Werkzeug und Verfahren zur Innengewindeprüfung zu schaffen.

Diese Aufgabe wird durch ein Werkzeug zur Innengewindeprüfung gemäß Anspruch 1 gelöst. Das erfindungsgemäße Werkzeug weist einen ersten Prüfabschnitt auf, der ein erstes Außengewinde mit einem sich konisch verändernden Flankendurchmesser trägt. Das Werkzeug erlaubt eine völlig neuartige Innengewindeprüfung.

Der erste Prüfabschnitt des Werkzeugs, der das erste Außengewinde mit dem sich konisch veränderten Flankendurchmesser trägt, kann sukzessive über eine definierte Anzahl von Umdrehungen in das Innengewinde eingeführt werden. Dann, wenn das Werkzeug beim Eindrehen in das Innengewinde steckenbleibt, liegt eine definierte Anzahl von Umdrehungen vor, über die das Werkzeug in das Innengewinde des zu prüfenden Bauteils eingeführt wurde. Diese Anzahl der Umdrehungen korreliert mit einem definierten Flankendurchmesser an dem ersten Prüfabschnitt, wodurch dann das Innengewinde hinsichtlich seines Innendurchmessers überprüft werden kann.

Das Werkzeug eignet sich insbesondere zur automatisierten Innengewindeprüfung. Es kann nicht nur zwischen Gutteilen und Schlechtteilen unterschieden werden, vielmehr kann bei einem Gutteil eine Aussage darüber getroffen werden, ob das Innengewinde sich nahe einer Toleranzgrenze oder mit weiterem Abstand zu der Toleranzgrenze befindet.

Nach einer vorteilhaften Weiterbildung der Erfindung weist das Werkzeug einen zweiten Prüfabschnitt auf, der ein zweites Außengewinde mit einem konstanten Flankendurchmesser aufweist, der kleiner ist als der kleinste Flankendurchmesser des ersten Prüfabschnitts.

Vorzugsweise ist der zweite Prüfabschnitt an einer Seite des ersten Prüfabschnitts angeordnet, an welcher der kleinste Flankendurchmesser des ersten Prüfabschnitts ausgebildet ist. Vorzugsweise verlaufen das erste Außengewinde und das zweite Außengewinde in dergleichen Helix und Steigung.

Dieser zweite Prüfabschnitt dient insbesondere der Überprüfung, ob das Innengewinde zu klein ist, also außerhalb des Toleranzbereichs an einer ersten Grenze des Toleranzbereichs liegt.

Nach einer vorteilhaften Weiterbildung der Erfindung weist das Werkzeug einen dritten Prüfabschnitt auf, der ein drittes Außengewinde mit einem konstanten Flankendurchmesser aufweist, der größer ist als der größte Flankendurchmesser des ersten Prüfabschnitts.

Vorzugsweise ist der dritte Prüfabschnitt an einer Seite des ersten Prüfabschnitts angeordnet, an welcher der größte Flankendurchmesser des ersten Prüfabschnitts ausgebildet ist. Vorzugsweise verlaufen das erste Außengewinde und das dritte Außengewinde in dergleichen Helix und Steigung.

Der dritte Prüfabschnitt dient der Überprüfung, ob das Innengewinde zu groß ist, also außerhalb des Toleranzbereichs benachbart zu einer zweiten Toleranzgrenze liegt.

Vorzugsweise ist ein Konuswinkel des ersten Prüfabschnitts vom Toleranzband der Innengewindeprüfung abhängig. Dann, wenn der Konuswinkel des ersten Prüfabschnitts von der Breite des Toleranzbands der Innengewindeprüfung abhängig ist, kann eine optimale, automatisierte Innengewindeprüfung vorgenommen werden.

Das erfindungsgemäße Verfahren zur automatisierten Innengewindeprüfung ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

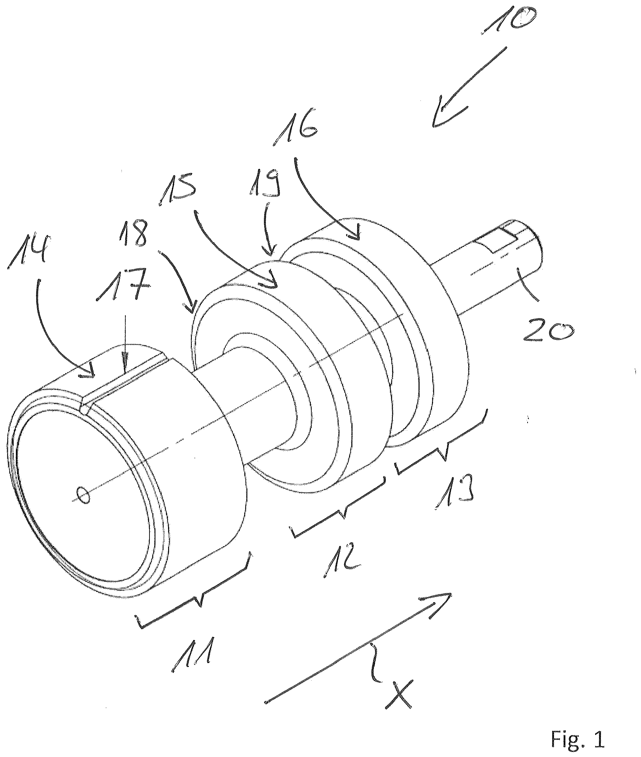

- Fig. 1: eine perspektivische Ansicht eines erfindungsgemäßen Werkzeugs zur automatisierten Innengewindeprüfung.

Fig. 1 zeigt eine perspektivische Ansicht eines besonders bevorzugten Ausführungsbeispiels eines solchen Werkzeugs 10 zur Innengewindeprüfung. Das Werkzeug 10 verfügt über einen ersten Prüfabschnitt 12, der ein erstes Außengewinde 15 trägt, wobei diese erste Außengewinde 15 einen sich in Axialrichtung konisch verändernden Flankendurchmesser aufweist, der ausgehend von einem ersten Ende 18 des ersten Prüfabschnitts in Richtung auf ein gegenüberliegendes zweites Ende 19 des Prüfabschnitts sich konisch vergrößert.

Im gezeigten, bevorzugten Ausführungsbeispiel verfügt das Werkzeug 10 weiterhin über einen zweiten Prüfabschnitt 11, der ein zweites Außengewinde 14 mit einem in Axialrichtung konstanten Flankendurchmesser aufweist, der kleiner ist als der kleinste Flankendurchmesser des ersten Außengewindes 15 des ersten Prüfabschnitts 12. Dabei ist der zweite Prüfabschnitt 11 an der Seite bzw. benachbart zum ersten Ende 18 des ersten Prüfabschnitts 12 angeordnet, an welchem der kleinste Flankendurchmesser des ersten Prüfabschnitts 12 bzw. des ersten Außengewindes 15 ausgebildet ist. Gemäß Fig. 1 sind dabei der erste Prüfabschnitt 12 und der zweite Prüfabschnitt 11 voneinander beabstandet.

Im gezeigten, bevorzugten Ausführungsbeispiel weist das Werkzeug 10 ferner einen dritten Prüfabschnitt 13 auf, der ein drittes Außengewinde 16 mit einem in Axialrichtung konstanten Flankendurchmesser aufweist, der größer ist als der größte Flankendurchmesser des ersten Außengewindes 15 des ersten Prüfabschnitts 12. Dabei ist der dritte Prüfabschnitt 13 bevorzugt an der Seite oder benachbart zum zweiten Ende 19 des ersten Prüfabschnitts 12 angeordnet, an welchem der größte Flankendurchmesser des ersten Prüfabschnitts 12 bzw. des ersten Außengewindes 15 ausgebildet ist. Gemäß Fig. 1 sind der erste Prüfabschnitt 12 und der dritte Prüfabschnitt 13 voneinander beabstandet.

Dann, wenn ein Bauteil mit einem Innengewinde einer Innengewindeprüfung mit dem Werkzeug 10 der Fig. 1 unterzogen werden soll, wird beginnend mit dem Prüfabschnitt 11 versucht, das Werkzeug 10 in das Innengewinde einzuführen, nämlich einzudrehen, wobei dann, wenn der zweite Prüfabschnitt 11 in das Innengewinde nicht eingedreht werden kann, darauf geschlossen werden kann, dass das Innengewinde deutlich zu klein ist, also außerhalb eines Toleranzbereichs liegt und demnach ein Schlechtteil vorliegt.

Dann, wenn der zweite Prüfabschnitt 12 in das zu prüfende Innengewinde eingedreht werden konnte und durch weiteres Eindrehen außer Eingriff mit dem Innengewinde gelangt, wird nachfolgend versucht, den ersten Prüfabschnitt 12 mit dem sich konisch verändernden Flankendurchmesser am ersten Außengewinde 15 desselben in das Innengewinde einzudrehen. Je weiter der erste Prüfabschnitt 12 mit dem sich in Axialrichtung konisch verändernden Flankendurchmesser am ersten Außengewinde 15 in das zu prüfende Innengewinde in Eingriff gebracht bzw. eingedreht werden kann, desto größer ist der Innendurchmesser des zu prüfenden Innengewindes. Bleibt hierbei der erste Prüfabschnitt 12 im Innengewinde stecken, so kann abhängig von der Anzahl der Umdrehungen, über welche der erste Prüfabschnitt 12 in das Innengewinde eingedreht wurde, auf den Innendurchmesser des zu prüfenden Innengewindes geschlossen so überprüft werden, wo der Innendurchmesser des zu prüfenden Innengewindes im Toleranzbereich liegt, ob der Innendurchmesser demnach nahe der Toleranzgrenzen oder weiter weg von den Toleranzgrenzen des Toleranzbereichs liegt.

Dann, wenn infolge des weiteren Eindrehens des Werkzeugs 10 auch der erste Prüfabschnitt 12 außer Eingriff mit dem zu prüfenden Innengewinde gebracht wurde und nachfolgend auch der dritte Prüfabschnitt 13 in das Innengewinde eingedreht werden kann, wird darauf geschlossen, dass der Innendurchmesser des zu prüfenden Innengewindes zu groß ist und dann wiederum ein Schlechtteil vorliegt.

Die beiden Prüfabschnitte 11 und 13 dienen demnach im gezeigten Ausführungsbeispiel der Prüfung eines Schlechtteils, wobei dann, wenn der Prüfabschnitt 11 nicht in das Innengewinde eingedreht werden kann, darauf geschlossen wird, dass das Innengewinde einen deutlich zu kleinen Innendurchmesser aufweist, wohingegen dann, wenn der dritte Prüfabschnitt 13 in das Innengewinde eingedreht werden kann, darauf geschlossen wird, dass ein Innengewinde mit einem deutlich zu großen Innendurchmesser vorliegt.

Wenn hingegen der Prüfabschnitt 11 in das Innengewinde eingedreht werden, jedoch nicht der Prüfabschnitt 13, so liegt ein Gutteil vor, dessen Innengewinde innerhalb eines definierten Toleranzbereichs liegt.

Abhängig davon, wie weit der erste Prüfabschnitt 12 mit dem sich in Axialrichtung konisch verändernden Flankendurchmesser am ersten Außengewinde 15 in das zu prüfende Innengewinde eingedreht werden kann, kann bestimmt werden, wie nah oder wie weit weg der Innendurchmesser des zu prüfenden Innengewindes von den Toleranzgrenzen liegt.

Das gesamte Verfahren zur Innengewindeprüfung kann automatisiert bzw. automatisch durchgeführt werden. Hierzu muss lediglich ein Bauteil mit einem zu prüfenden Innengewinde sowie ein erfindungsgemäßes Werkzeug 10 bereitgestellt werden.

Das In-Eingriff-Bringen des Außengewindes der Prüfabschnitte 11, 12, 13 mit dem zu prüfenden Innengewinde sowie die Erfassung und Auswertung der Umdrehungen des Werkzeugs relativ zum Bauteil kann automatisch bzw. automatisiert erfolgen, um so die gesamte Innengewindeprüfung automatisch bzw. automatisiert vorzunehmen.

Das gesamte Verfahren kann während der Produktion der Bauteile bzw. während der Ausbildung der Innengewinde an Bauteilen vorgenommen werden, um abhängig von der automatisiert vorgenommenen Innengewindeprüfung die Fertigung der Bauteile bzw. Ausbildung der Innengewinde an den Bauteilen automatisiert anzupassen, indem das Ergebnis der Innengewindeprüfung automatisch bzw. automatisiert zur Anpassung eines Schneidwerkzeugs bzw. zur Anpassung von Betriebsparametern des Schneidwerkzeugs verwendet wird, welches der Ausbildung der Innengewinde dient. Während eines Fertigungsvorgangs wird abhängig von der automatisierten Innengewindeprüfung das Schneidwerkzeug derart beeinflusst, dass bei der Innengewindeprüfung das Werkzeug mit seinem ersten Prüfabschnitt im zu prüfenden Innengewinde steckenbleibt. Es ist möglich einen Schneidwerkzeugverschleiß automatisch zu kompensieren.

Über einen Anbindungsabschnitt 20 kann das erfindungsgemäße Werkzeug 10 an eine Werkzeugmaschine angebunden werden, um das Werkzeug 10 über die Werkzeugmaschine automatisiert einzusetzen.

In den zweiten Prüfabschnitt 11 ist vorzugsweise eine Schmutznut 17 eingebracht, über die während des Innengewindeprüfvorgangs Schmutz abgeführt werden kann.

Das erste Außengewinde 15 des ersten Prüfabschnitts 12 und das zweite Außengewinde 14 des zweiten Prüfabschnitts 11 sowie das dritte Außengewinde 16 des dritten Prüfabschnitts 13 liegen auf einer Helix bzw. Steigung.

Es ist auch möglich, dass das Werkzeug 10 zur Innengewindeprüfung ausschließlich den ersten Prüfabschnitt 12 aufweist, der ein erstes Außengewinde 15 mit einem sich konisch verändernden Flankendurchmesser trägt. Zusätzlich kann das Werkzeug 10 zur Innengewindeprüfung optional den zweiten Prüfabschnitt 11 und/oder den dritten Prüfabschnitt 13 aufweisen.

### Bezugszeichenliste

- 10: Werkzeug
- 11: zweiter Prüfabschnitt
- 12: erster Prüfabschnitt
- 13: dritter Prüfabschnitt
- 14: zweites Außengewinde
- 15: erstes Außengewinde
- 16: drittes Außengewinde
- 17: Schmutznut
- 18: erstes Ende
- 19: zweites Ende
- 20: Anbindungsabschnitt

## Patentansprüche

1. Werkzeug (10) zur Innengewindeprüfung,
mit einem ersten Prüfabschnitt (12), der ein erstes Außengewinde (15) mit einem sich konisch verändernden Flankendurchmesser trägt.

2. Werkzeug nach Anspruch 1, mit einem zweiten Prüfabschnitt (11), der ein zweites Außengewinde (14) mit einem konstanten Flankendurchmesser aufweist, der kleiner ist als der kleinste Flankendurchmesser des ersten Prüfabschnitts (12).

3. Werkzeug nach Anspruch 2, wobei der zweite Prüfabschnitt (11) an einer Seite des ersten Prüfabschnitts (12) angeordnet ist, an welcher der kleinste Flankendurchmesser des ersten Prüfabschnitts (12) ausgebildet ist.

4. Werkzeug nach Anspruch 3, wobei der erste Prüfabschnitt (12) und der zweite Prüfabschnitt (11) voneinander beabstandet sind.

5. Werkzeug nach einem der Ansprüche 1 bis 4, mit einem dritten Prüfabschnitt (13), der ein drittes Außengewinde (16) mit einem konstanten Flankendurchmesser aufweist, der größer ist als der größte Flankendurchmesser des ersten Prüfabschnitts (12).

6. Werkzeug nach Anspruch 5, wobei der dritte Prüfabschnitt (13) an einer Seite des ersten Prüfabschnitts (12) angeordnet ist, an welcher der größte Flankendurchmesser des ersten Prüfabschnitts (12) ausgebildet ist.

7. Werkzeug nach Anspruch 5 oder 6, wobei der erste Prüfabschnitt (12) und der dritte Prüfabschnitt (13) voneinander beabstandet sind.

8. Werkzeug nach einem der Ansprüche 1 bis 7, wobei ein Konuswinkel des ersten Prüfabschnitts (12) vom Toleranzband der Innengewindeprüfung abhängig ist.

9. Werkzeug nach einem der Ansprüche 2 bis 8, mit einer Schmutznut (17) am zweiten Prüfabschnitt (11).

10. Werkzeug nach einem der Ansprüche 2 bis 9, das erstes Außengewinde (15) und das zweite Außengewinde (14) und/oder das dritte Außengewinde (16) in dergleichen Helix und Steigung verlaufen.

11. Verfahren zur Innengewindeprüfung,
Bereitstellen eines Bauteils mit einem zu prüfenden Innengewinde;
Bereitstellen eines Werkzeug (10) nach einem der Ansprüche 1 bis 10;
automatisiertes In-Eingriff-Bringen des Außengewindes (14, 15, 16) des jeweiligen Prüfabschnitts (11, 12, 13) mit dem zu prüfenden Innengewinde des Bauteils;
automatisiertes Auswerten der Umdrehungen des Werkzeugs (10) relativ zum Bauteil zur automatisiertes Prüfung des Innengewindes.
